# EUROPEAN PATENT SPECIFICATION

(11) **EP 4 048 562 B1**
(45) Date of publication and mention of the grant of the patent: **20.12.2023**
(21) Application number: 20799632.3
(22) Date of filing: 20.10.2020
(51) Int. Cl.: B60T 1/10, B60T 13/66, B60T 13/74, B60T 8/17, B60T 8/88, B60T 17/22

(54) **AN ELECTROMECHANICAL BRAKE SYSTEM**
ELEKTROMECHANISCHE BREMSANLAGE
SYSTÈME DE FREINAGE ÉLECTROMÉCANIQUE

(30) Priority: 21.10.2019 CN 201911001134
(43) Date of publication of application: 31.08.2022
(73) Proprietor: Haldex Brake Products Aktiebolag, 261 24 Landskrona (SE)
(72) Inventor: DONG, Xianbin, Shanghai, 201804 (CN)
(74) Representative: REHBERG HÜPPE + PARTNER
(86) International application number: PCT/EP2020/079458
(87) International publication number: WO 2021/078716

(56) References cited:
- EP-A1- 3 339 119
- CN-A- 102 616 145
- CN-A- 105 480 098
- CN-A- 105 751 902
- CN-A- 106 476 776
- CN-U- 201 466 779
- US-A1- 2006 108 867
- US-A1- 2008 135 357
- US-A1- 2014 152 201

## Description

### TECHNICAL FIELD OF THE INVENTION

The present invention relates to electromechanical brake technology, and more particularly to an electromechanical brake system.

### PRIOR ART

Vehicles are essential to the daily traffic of people and have a high penetration rate. In order to avoid obstacles around the car, it is often necessary to use a brake device to reduce the moving speed of vehicles or even stop the movement of vehicles during driving.

The conventional brake device usually uses hydraulic or pneumatic pressure as a medium mechanical drive to drive brake pads to frictionally engage a rotary brake disc, thereby achieving the purpose of braking. The conventional brake system has a long response time and a complicated energy transmission path that causes low efficiency.

In order to enhance the braking ability of vehicles and simplify the structure of brake system, the prior art further proposes an electromechanical brake (EMB) system.

In an existing electromechanical brake system, the raw energy of a brake action is derived from a battery of a vehicle. The raw energy is charged by a voltage conversion to an ultra-capacitor module. The ultra-capacitor module may directly output electrical energy to a brake motor to generate a braking force.

The existing electromechanical brake system may comprise a motor for generating a braking force and a mechanical transmission mechanism driven by the motor. In a disc brake, the mechanical transmission mechanism may comprise a calliper.

When a driver steps on a brake pedal or generates a brake command in a non-human operation mode, such as ABS, ESP, automatic driving system, etc., a motor controller may control the motor to rotate in a forward direction after receiving the brake command, thereby driving the mechanical transmission to push brake pads against a brake disc for generating a braking force.

In the meantime, the mechanical transmission mechanism may store part of energy output from the motor while transmitting the braking force.

The motor controller may control the motor to changed the applied braking force in response to receiving a command to reduce or release a service brake or a parking brake. The motor may rotate in a reverse direction under the effect of the mechanical transmission mechanism. The speed of motor rotation in the reverse direction is proportional to the amount of braking force generated when the brake action was applied. That is to say, the greater the braking force applied during the brake action, the greater the force that the mechanical transmission rebounds when the brake pedal is released. Accordingly, the speed of motor rotation in the reverse direction may be greater.

A reverse electromotive force may be generated when the motor rotates in a reverse direction. The reverse electromotive force may cause a voltage rise across the motor controller. Therefore, if this part of the energy is not released, it is highly likely to cause overvoltage damage to the circuit of the electromechanical brake system.

In addition, due to the need of multiple brake actions during a running of a vehicle, the existing electromechanical brake system may inevitably cause a large amount of energy loss, which is disadvantageous for reducing energy consumption of the vehicle.

Therefore, in order to overcome the above drawbacks, there is a need in the art of electromechanical brake technology to avoid an accumulation of a back electromotive force generated when the motor rotates in a reverse direction, thereby avoiding a hidden danger of circuit overvoltage damage and reducing energy consumption of the electromechanical brake system.

US 2006/0108867 A1 discloses an electromechanical brake system for an aircraft. US 2006/0108867 A1 starts from the observation that electromechanical braking systems have a tendency to produce regenerative electrical energy. In prior art brake systems the regenerative electrical energy is dissipated as heat which leads to power usage in efficiencies. The brake system proposed in US 2006/0108867 A1 comprises redundant power sources, redundant digital brake system control units (BSCUs) and couples of electromechanical actuator controllers (EMACs) and brake actuators associated with each of the wheels. The BSCUs serve for carrying out the brake control and anti-skid processing functions. The EMACs convert brake clamp force demands from the BSCUs to control signals of servo motors of the brake actuators. The power sources power the circuitry of the BSCUs and EMACs wherein power is provided by the EMACs to the brake actuators via respective power lines which might be embodied as redundant power busses. Electrical energy back-up systems ensure operating power in the braking system in the event of a failure of the redundant power lines. The back-up system includes capacitor banks and converters. The capacitor banks are charged via the converters by the power lines. The capacitor banks are dimensioned for providing electrical power for the operation of the brake system for a given amount of time and for being able to bring the aircraft to a complete stop including anti-skid brake control and braking for ground maneuvering after the stop. The torque of the servo motor is transmitted via a gear train and an actuator ram to a stack of brake discs. A capacitive energy storage device formed by a capacitor is arranged parallel to the EMAC. The capacitive energy storage device can be charged by regenerative electrical energy supplied by the motor of the brake actuator. Such regenerative electrical energy results from the energy of the rotor of the motor when reducing the number of revolutions of the motor. Furthermore, regenerative electrical energy stems from elastic energy stored in the compressed brake stack which forms an energy storage similar to a spring. When the actuator ram is retracted the brake stack releases the stored energy which drives the actuator ram, the gear train and the motor backwards. If the charging of the capacitive energy storage device by regenerative energy leads to a high voltage level, a flow of power from the capacitive energy storage device to the main power supply is blocked by an interposed diode. The energy stored in the capacitive energy storage device can be used for powering the EMAC and the brake actuator. The capacitive energy storage device can also be used in the case of a power failure of the main power supply. Regenerative energy stored in the capacitive energy storage device can also be used for providing a power boost for a subsequent application of braking force. For example, during anti-skid operation of the electromechanical braking system the actuator ram is cyclically actuated between compressions of and retractions from the brake stack. Here, during the retraction of the cycle regenerative energy is produced and stored. Thereafter, during the compression of a subsequent cycle the stored energy can avail more electrical power than if regenerative energy had not been stored. US 2006/0108867 A1 also proposes a regenerative management circuit wherein the capacitive energy storage device and a regenerative clamp are arranged in parallel circuit branches. The regenerative clamp is configured to limit voltage transients across the capacitive energy storage device. The regenerative clamp might be embodied as resistive element converting electrical energy into heat. The resistor can be switched to the capacitive energy storage device using a solid state switch as power FET or IGBT. A sense line connected to the capacitive energy storage device can be used to activate the switching at the predetermined value.

CN 201466779 U relates to an electric motor management for operating the electric motor in a load mode and a regeneration mode. Here, the electric motor is used for driving an elevator, a crane for lifting goods or a pump used for oil exploitation.

EP 3 339 119 A1 discloses a redundant electric brake system for a motor vehicle wherein capacitor-based power sources can be recharged by an external recharging power source which might be a vehicle accumulator, a generator, a retarder, a hub generator or an electric motor used for driving the vehicle which can be used in a recuperation mode and the like. Also here, capacitor-base power sources can be recharged when receiving mechanical spring energy from the brake actuator when releasing the brake.

### OBJECT OF THE INVENTION

It is the object of the present invention to provide a electromechanical brake system which is in particular improved with respect to
- an avoidance of an accumulation of a back electromotive force generated when the motor rotates in a reverse direction and/or
- an avoidance of a hidden danger of circuit overvoltage damage and/or
- a reduction of an energy consumption of the electromechanical brake system.

### SOLUTION

According to the present invention, the object of the invention is solved by the features of the independent claim. Additional preferred embodiments according to the invention are to be seen in the dependent claims.

### DESCRIPTION OF THE INVENTION

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

In order to overcome the above drawbacks, the present invention provides an electromechanical brake (EMB) system to avoid an accumulation of a back electromotive force generated when the motor rotates in a reverse direction, thereby avoiding a hidden danger of circuit overvoltage damage and reducing energy consumption of the electromechanical brake system.

The electromechanical brake system provided in the present invention comprises a capacitor-based power source and at least one electric brake device. The electric brake device comprises a motor that acquires electric power from the capacitor-based power source via a power supply main circuit to generate a braking force. The electromechanical brake system further comprises an energy recycling circuit connected in parallel to the power supply main circuit. The energy recycling circuit comprises a unidirectional conduction element and/or a voltage regulating element.

When the brake force is reduced or the brake is at least partially released in response to a braking demand, the motor generates energy which is returned to the capacitor-based power source via the energy recycling circuit.

According to the electromechanical brake system provided in the present invention, the electromechanical brake system further comprises a protective switch assembly, the capacitor-based power source being electrically connected to the motor through the protective switch assembly and the protective switch assembly being configured to control forward conduction of the power supply main circuit.

According to the electromechanical brake system provided in the present invention, the electric brake device further comprises a control module, which is electrically connected to the motor and the protection switch assembly, and controls the protective switch assembly to cut off an electrical connection between the motor and the capacitor-based power source in response to an abnormality signal.

In the inventive electromechanical brake system the energy recycling circuit protects the control module from an overvoltage damage and recovers the energy generated when the brake motor is reversed.

According to the electromechanical brake system provided in the present invention, optionally, when the energy recycling circuit comprises the voltage regulating element, the voltage regulating element comprises a linear voltage regulator and/or a DC-DC converter.

According to the electromechanical brake system provided in the present invention, optionally, when the energy recycling circuit comprises the voltage regulating element, an operating voltage threshold of the voltage regulating element is greater than a maximum operating voltage of the capacitor-based power source.

According to the electromechanical brake system provided in the present invention, preferably, the energy recycling circuit may comprise a resistance for limiting a recharge current generated by the energy.

According to the electromechanical brake system provided in the present invention, optionally, when the energy recycling circuit comprises the unidirectional conduction element, the unidirectional conduction element may comprise at least one of a diode, a thyristor, a triode or a MOS transistor.

According to the electromechanical brake system provided in the present invention, optionally, a charging level of the capacitor-based power source is configured to be associated with actual recyclable energy recovered from the motor to the capacitor-based power source via the energy recycling circuit.

According to the electromechanical brake system provided in the present invention, optionally, a charging level of the capacitor-based power source is configured to reserve a preset margin corresponding to maximum recyclable energy that is recovered from the motor to the capacitor-based power source via the energy recycling circuit.

According to the electromechanical brake system provided in the present invention, optionally, a mechanical transmission mechanism of the electric brake device may be a non-self-locking mechanism.

According to the electromechanical brake system provided in the present invention, preferably, the protective switch assembly may comprise a triode and at least two MOS transistors, the at least two MOS transistors may be connected in series with the power supply main circuit, the triode may be electrically connected to the at least two the MOS transistors, the control module may turn off the at least two MOS transistors by controlling the triode to cut off the electrical connection between the motor and the capacitor-based power source in response to the abnormality signal.

According to the electromechanical brake system provided in the present invention, optionally, the control module may comprise a main control unit and a motor drive module, the motor may comprise at least two phase inputs, the main control unit may be communicatively connected to the power switch, the main control unit may be configured to turn the power switch on or off, the power switch may be configured to enable the motor drive module, the motor drive module may be configured to control the motor to output a positive torque.

According to the electromechanical brake system provided in the present invention, preferably, the motor may comprise three phase inputs, when the brake force is reduced or the brake is at least partially released in response to the braking demand, the motor may acquire electric power from the power supply main circuit through at least one of the three phase inputs to drive the motor to output a positive torque, the energy recycling circuit may recover electric power from the motor through the remaining of the three phase inputs.

According to the electromechanical brake system provided in the present invention, optionally, the motor may comprise a DC motor.

According to the electromechanical brake system provided in the present invention, optionally, the capacitor-based power source may comprise an ultra-capacitor.

Advantageous developments of the invention result from the claims, the description and the drawings.

The advantages of features and of combinations of a plurality of features mentioned at the beginning of the description only serve as examples.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

The above features and advantages of the present invention will be better understood after reading the detailed description of the embodiments of the present disclosure in conjunction with the following figures. In the figures, components are not necessarily drawn to scale, and components having similar related features may have the same or similar reference numerals.
- **Fig. 1**: shows a circuit diagram of an electromechanical brake system according to an embodiment of the present invention.
- **Fig. 2**: shows a schematic of a three-phase motor according to an embodiment of the present invention.
- **Fig. 3**: shows a schematic of an electric brake device according to an embodiment of the present invention.
- **Fig. 4A**: shows a schematic of power recovering by a three-phase motor according to an embodiment of the present invention.
- **Fig. 4B**: shows a schematic of power recovering by a three-phase motor according to an embodiment of the present invention.
- **Fig. 5**: shows a schematic of an energy recycling circuit according to an embodiment of the present invention.
- **Fig. 6**: shows a schematic of an energy recycling circuit according to an embodiment of the present invention.
- **Fig. 7A-7B**: show schematics of ports of a protective switch assembly according to an embodiment of the present invention.
- **Fig. 8**: shows a schematic of an electromechanical brake system according to an embodiment of the present invention.
- **Fig. 9**: shows a flowchart of a brake action performed by an electromechanical brake system according to another embodiment of the present invention.
- **Fig. 10**: shows a flowchart of energy recovery performed by an electromechanical brake system according to another embodiment of the present invention.

### DESCRIPTION OF THE DRAWINGS

The embodiments of the present invention are described below by way of specific embodiments. Those skilled in the art may readily understand other advantages and functions of the present invention from the disclosure of the present invention. Although the description of the present invention may be described in conjunction with the embodiments, this does not mean that the features of the invention are limited to the embodiments. On the contrary, the invention is described in connection with the embodiments so as to cover other alternatives or modifications that are possible in the embodiments of the invention. In order to provide a thorough understanding of the present invention, many specific details may be included in the following description. The invention may also be practiced without these details. In addition, some specific details are omitted in the description in order to avoid obscuring the present invention.

The present invention provides an embodiment of an electromechanical brake (EMB) system to avoid an accumulation of a back electromotive force generated when the motor rotates in a reverse direction, thereby avoiding a hidden danger of circuit overvoltage damage and reducing energy consumption of the electromechanical brake system.

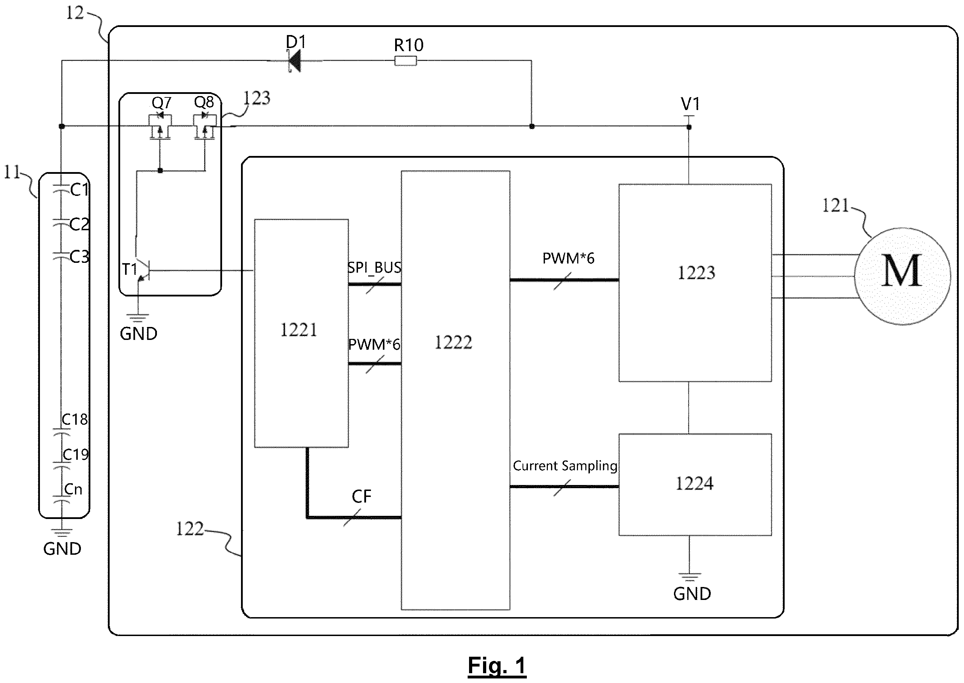

Referring to **Fig. 1**, Fig. 1 shows a circuit diagram of an electromechanical brake system (1) according to an embodiment of the present invention.

As shown in Fig. 1, the electromechanical brake system (1) provided by this embodiment may comprise a capacitor-based power source 11 and at least one electric brake device 12.

The capacitor-based power source 11 is mainly configured to supply energy, required to drive a brake motor 121 that generates a braking force, to the electromechanical brake system (1). The capacitor-based power source 11 comprises, but is not limited to, an ultra-capacitor group composed of a plurality of capacitor units in series and/or parallel. The ultra-capacitor group may be configured to directly supply power to the motor and perform energy recovery. This circuit structure may ensure high-capacity transmission in a short time.

In the electromechanical brake system (1) according to the embodiment, an ultra-capacitor group 11, composed of a plurality of capacitor units C1-Cn connected in series, may be selected as the capacitor-based power source 11 of the electromechanical brake system (1).

The electromechanical brake system (1) may obtain energy from an energy storage battery, a power battery or a generator of the vehicle, and charge the capacitor-based power source 11 by means of prior art methods well known to those skilled in the art, such as voltage conversion. The capacitor-based power source 11may directly output electric energy to the brake motor 121 to generate a braking force, in response to a brake demand.

Those skilled in the art may understand that the ultra-capacitor group 11 composed of the plurality of capacitor units C1-Cn connected in series, and the solution for obtaining energy from a battery of the vehicle are only specific embodiments provided in the present invention, mainly for more clearly showing the concept of the present invention to the public, and providing a feasible solution, but not intended to limit the scope of the invention.

In other embodiments, those skilled in the art may also employ other configurations or forms of capacitor-based power source 11, or employ other means to obtain the energy required to drive the brake motor 121.

As shown in Fig. 1, the electromechanical brake system (1) provided by this embodiment may comprise one or more electric brake devices 12. A plurality of electric brake devices 12 may be disposed at a plurality of wheel ends of the vehicle to reduce the speed of the vehicle.

The electric brake device 12 may comprise a brake motor 121, a control module 122 and power switch assembly 123. The brake motor 121 comprises, but is not limited to, a three-phase motor, and may obtain electric power from the capacitor-based power source 11 via the power supply main circuit (13) of the electric brake device 12, thereby rotating in a forward direction to generate a braking force, required to reduce the speed of the vehicle.

Exemplarily, the control module 122 comprises a main control unit 1221 for processing brake demands and outputting motor control signals, a motor drive module 1223 and a current sampling circuit 1224. Those skilled in the art may understand that the motor controller and drive circuit of the control module 122 can be replaced by various feasible configurations of existing motor technology.

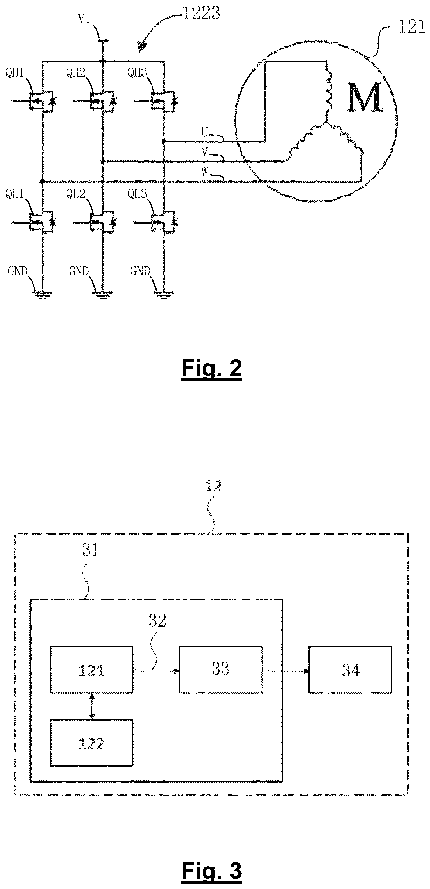

Referring to **Fig. 2,** Fig. 2 shows a schematic of a three-phase motor according to an embodiment of the present invention.

As shown in Fig. 2, in an embodiment, the brake motor 121 mentioned above may be a three-phase motor comprising three phase inputs U, V, and W. The three-phase motor 121 may be driven by a three-phase full-bridge driving circuit 1223 composed of six MOS transistors QH1-QH3, QL1-QL3.

In response to a control command, the three-phase full-bridge driving circuit 1223 may drive the three-phase motor 121 to rotate in a forward direction by on and off of the MOS transistors QH1-QH3, QL1-QL3 to generate a braking force. The on and off of the MOS transistors QH1-QH3, QL1-QL3 may be determined according to the received control command and the position of a rotor of the three-phase motor 121. Specifically, in response to the control command, the high-side transistor QH1 of the W-phase and the low-side transistor QL3 of the U-phase of the three-phase full-bridge driving circuit 1223 may be turned on first, and the low-side transistor QL1 of the W-phase and the high-side transistor QH3 of the U-phase may be turned off. At this time, the three-phase brake motor 121 may obtain electric power through the W-phase input.

Thereafter, the high-side transistor QH2 of the V-phase and the low-side transistor QL1 of the W-phase of the three-phase full-bridge driving circuit 1223 may be turned on, and the low-side transistor QL2 of the V-phase and the high-side transistor QH1 of the W-phase may be turned off. At this time, the three-phase brake motor 121 may obtain electric power through the V-phase input.

Thereafter, the high-side transistor QH3 of the U-phase and the low-side transistor QL2 of the V-phase of the three-phase full-bridge driving circuit 1223 may be turned on, and the low-side transistor QL3 of the U-phase and the high-side transistor QH2 of the V-phase may be turned off. At this time, the three-phase brake motor 121 may obtain electric power through the U-phase input.

By analogy, the three-phase brake motor 121 may obtain power from the capacitor-based power source 11 via the power supply main circuit (13) of the electric brake device 12 by at least one of the three phase inputs alternately, thereby rotating in the forward direction to produce a braking force required to reduce the speed of a vehicle.

Those skilled in the art may understand that the three-phase motor 121 mentioned above is an embodiment according to the present invention. In another embodiment, a motor with only two phase inputs may also possibly employed to obtain power from the capacitor-based power source 11 via the power supply main circuit (13) of the electric brake device 12, thereby rotating in the forward direction to generate a braking force required to reduce the speed of a vehicle. Accordingly, the motor may also be driven by a two-phase full-bridge drive circuit or a two-phase half-bridge drive circuit.

In order to simplify the drive circuit structure of the brake motor 121 and obtain better speed regulation performance, a DC motor may also be selected as the brake motor 121 that generates a braking force. The DC motor may be directly powered by a capacitor-based power source 11 that outputs a suitable voltage, or powered by a capacitor-based power source 11 via a DC-DC transformer module.

As shown in Fig. 1, the power supply main circuit (13) of the electric brake device 12 may be respectively connected to a voltage output end of the capacitor-based power source 11 and a voltage input end of the brake motor 121. The power supply main circuit (13) is mainly configured to supply power, output by the capacitor-based power source 11, to the brake motor 121.

The power supply main circuit (13) may be further connected to a power switch assembly 123 for turning the power supply main circuit (13) on or off. The power switch assembly 123 may be comprised of one or more power switches and controlled by a control module 122 of the electric brake device 12.

When the driver depresses a brake pedal or generates a brake command in a non-human operation mode, such as with ABS, ESP, automatic driving system, etc., in response to receiving the command indicating a brake demand, the control module 122 may control the power switch assembly 123 to turn on the power supply main circuit (13) to supply power to the brake motor 121.

The three-phase brake motor 121 provided in this embodiment may alternately obtain power from the power supply main circuit (13) through at least one of three phase inputs. Meanwhile, an energy recycling circuit (14) may recover power from the motor through the remaining of the three phase inputs. At this time, the force for driving the brake motor 121 to be reversed is moderated, so that the process of releasing the braking force may be gentle and stable, avoiding the impact of the calliper and the mechanical transmission mechanism at the moment when the braking force is released.

In response to obtaining power from the capacitor-based power source 11 via the power supply main circuit (13), the brake motor 121 may directly generate a braking force to reduce the speed of the vehicle, or generate a driving force for driving a mechanical transmission mechanism of the electric brake device, to drive the mechanical transmission mechanism to generate a braking force to reduce the speed of the vehicle.

Specifically, in the electromechanical brake system provided in the embodiment, a calliper may be connected to the end of the mechanical transmission mechanism for clamping a brake disc connected to the wheel, thereby achieving braking purpose.

The control module 122 of the electric brake device 12 may control the brake motor 121 to rotate in a forward direction to drive the mechanical transmission mechanism to push the calliper against the brake disc of the wheel in response to receiving a command indicating a brake demand, thereby generating a braking force.

Referring to Fig. 3, Fig. 3 shows a schematic of an electric brake device according to an embodiment of the present invention.

As shown in Fig. 3, an electric actuator 31 comprising a brake motor 121 and a control module 122 of the electric brake device 12 is configured to output a braking torque. Taking a disc brake as an example, the electric actuator 31 may output a torque to the mechanical transmission mechanism 33 via a shaft 32, driving a brake calliper after speed reduction, torque increase, rotary-linear motion conversion, and finally clamp brake pads 34 to the brake disc (not shown) by a thrust applied to the brake pad 34, thereby generating the braking force. The mechanical transmission mechanism 33 may employ any mechanisms known to those skilled in the art, such as using a planetary gear mechanism for speed reduction and torque increase, and using a mechanism, such as a thread, a lead screw or a roller ramp, for rotary-linear motion conversion. When a non-self-locking transmission mechanism is employed, torque transfer may be transmitted from the brake motor 121 to the brake pad 34 and transmitted freely reversed. In addition to being integrated in the electronic brake system, the control module 122 may also be deposed at other locations on the vehicle, such as a chassis, as a separate controller or integrated with the capacitor-based power source.

When the calliper presses the brake disc of the wheel, the mechanical transmission mechanism and the calliper may store a portion of mechanical energy during transfer of the braking force from the motor to the brake disc. When the driver releases the brake pedal to release or reduce the service brake or operates the parking switch to release the parking brake, the control module 122 may stop supplying power to the brake motor 121 in response to a command to release the brake, thereby releasing the brake calliper. The brake motor 121 may be reversely rotated by the mechanical transmission mechanism, and the speed of its rotation may be proportional to the braking force generated when the brake is applied. That is to say, the greater the braking force applied during braking, the greater the force transmitted backward by the mechanical transmission mechanism when the brake calliper is released, and the faster the motor reverses accordingly.

Those skilled in the art may understand that when the brake motor 121 is reversed, energy may be generated in a form of a back electromotive force that may cause a voltage rise across the control module 122. The energy may cause overvoltage damage to the control module 122.

As shown in Fig. 1, in order to protect the control module 122 from the overvoltage damage and recover the energy generated when the brake motor 121 is reversed, the electromechanical brake system (1) provided in this embodiment may further comprise an energy recycling circuit (14). The energy recycling circuit (14) may be connected in parallel to the power supply main circuit (13), and may be disposed at the wheel side of the vehicle together with the brake motor 121. The energy recycling circuit (14) may comprise a unidirectional conduction element D1.

The unidirectional conduction element D1 comprises but is not limited to a diode, a thyristor, a triode or a MOS transistor, mainly configured to prevent the capacitor-based power source 11 from supplying power to the brake motor 121 via the energy recycling circuit (14). When the brake motor 121 is reversed to generate a reverse electromotive force, the unidirectional conduction element D1 may allow the reverse electromotive force to charge the capacitor-based power source 11 via the energy recycling circuit (14) to recover the energy generated when the brake motor 121 is reversed, thereby avoiding the overvoltage damage of the control module 122.

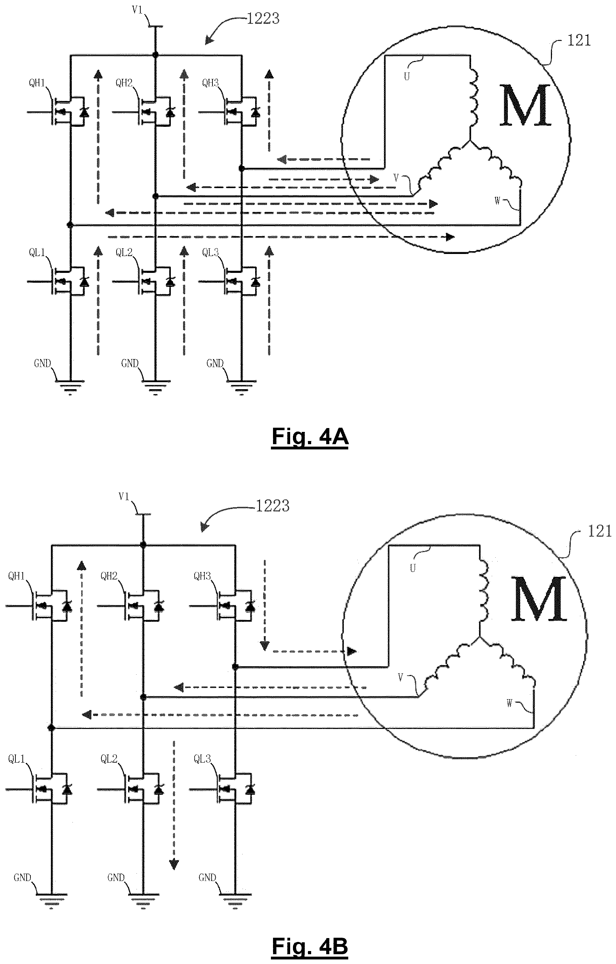

Referring to **Fig. 4A**, Fig. 4A shows a schematic of power recovering by a three-phase motor according to an embodiment of the present invention.

As shown in Fig. 4A, in response to a command to release the brake, the three-phase full-bridge driving circuit 1223 may stop supplying power to the brake motor 121 by turning off all of the MOS transistors QH1-QH3, QL1-QL3. The brake motor 121 may be reversely rotated by the mechanical transmission mechanism to generate a reverse electromotive force. The reverse electromotive force is higher than a motor input voltage V1 provided by the capacitor-based power source 11. At this time, energy generated in the form of the reverse electromotive force may enter the energy recycling circuit (14) via body diodes of the respective MOS transistor s QH1-QH3, QL1-QL3 for energy recovery.

Those skilled in the art may understand that the solution that stops powering the brake motor 121 to completely release the brake is an embodiment according to the present invention. In another embodiment, when the driver releases the brake pedal to release the service brake slowly or operates the parking switch to release the parking brake, the three-phase full-bridge driving circuit 1223 may also supply power to the brake motor 121 by two phase inputs, thereby driving the brake motor 121 to output a positive small torque to slowly release the brake. At the same time, the three-phase full-bridge driving circuit 1223 may recover power from the three-phase brake motor 121 via the remaining one phase.

Referring to **Fig. 4B,** Fig. 4B shows a schematic of power recovering by a three-phase motor according to an embodiment of the present invention.

As shown in Fig. 4B, in response to a command to release the brake, the three-phase full-bridge driving circuit 1223 may first turn on the high-side transistor QH3 of the U-phase and the low-side transistor QL2 of the V-phase, and turn off the low-side transistor QL3 of the U-phase and the high-side transistor QH2 of the V-phase, thereby supplying power to the three-phase brake motor 121 via the U-phase input to drive the braking motor 121 to output a positive small torque to slowly release the brake. The direction of the positive torque coincides with the direction of the forward rotation mentioned above. The mechanical transmission mechanism of the electric brake device 12 may push brake pads to press a brake disk to generate a braking force under the positive torque.

At the same time, the transistors QH1 and QL1 of the W phase that are not involved in the power supply are all in the off state. In response to a reverse electromotive force, generated by the brake motor 121 under the action of the mechanical transmission mechanism, being higher than the motor input voltage V1 provided by the capacitor-based power source 11, the electric power may be recovered from the three-phase brake motor 121 through a body diode of the high-side transistor QH1 of the W-phase.

By analogy, the three-phase brake motor 121 may obtain power from the capacitor-based power source 11 via the power supply main circuit (13) of the electric brake device 12 by two of the three phase inputs alternately. In the meantime, the energy recycling circuit (14) provided in this embodiment may alternately recover power from the three-phase brake motor 121 through one of the three phase inputs of the brake motor 121 that is not involved in power supply. The energy generated by the brake motor 121 may be recovered to the capacitor-based power source 11 via the energy recycling circuit (14) to charge the capacitor-based power source 11 to compensate for energy consumed during braking.

By braking a vehicle with the solution, obtaining power from the power supply main circuit (13) with two phase inputs while recovering power from the brake motor 121 with a remaining phase input, the retraction of the motor 121 may be slowed down according to the speed at which the driver releases the braking pedal during the service braking, so that energy may be recovered whether the brake is released quickly or slowly.

Unlike the regenerative braking of vehicle kinetic energy recovery performed by a vehicle drive motor in the prior art, the electromechanical brake system (1) with energy recycling circuit (14) shown in Fig. 1 is based on the principle of electromechanical braking to recover energy stored in a mechanical transmission mechanism of the brake system. In order to avoid excessive current on the energy recycling circuit (14) when the brake motor 121 reverses to generate a reverse electromotive force, the energy recycling circuit (14) may further comprise a current limiting resistor R10. The current limiting resistor R10 may be configured to limit a reverse current caused by the energy generated when the brake motor 121 is reversed.

The specific value of the current limiting resistor R10 may be determined by the current capability of each circuit unit on the energy recycling circuit (14). A current limiting resistor R10 with insufficient resistance may cause overcurrent damage to wires or the unidirectional conduction element D1 on the energy recycling circuit (14). On the contrary, a current limiting resistor R10 with excessive resistance may cause an insufficient recharging flow, so that the energy generated when the brake motor 121 is reversed may not be recovered in time, thereby causing overvoltage damage of the control module 122. A current limiting resistor R10 with excessive resistance may also cause more energy loss, thereby reducing energy recovering efficiency of the energy recycling circuit (14), and generating a large amount of heat to increase the load on the heat dissipation system of the vehicle.

Those skilled in the art may understand that the energy recycling circuit (14) comprising the unidirectional conduction element D1 is an embodiment of the present invention. In another embodiment of the present invention, the energy recycling circuit (14) may also comprise a voltage regulating element. The voltage regulating element comprises, but is not limited to, a DC-DC converter 53.

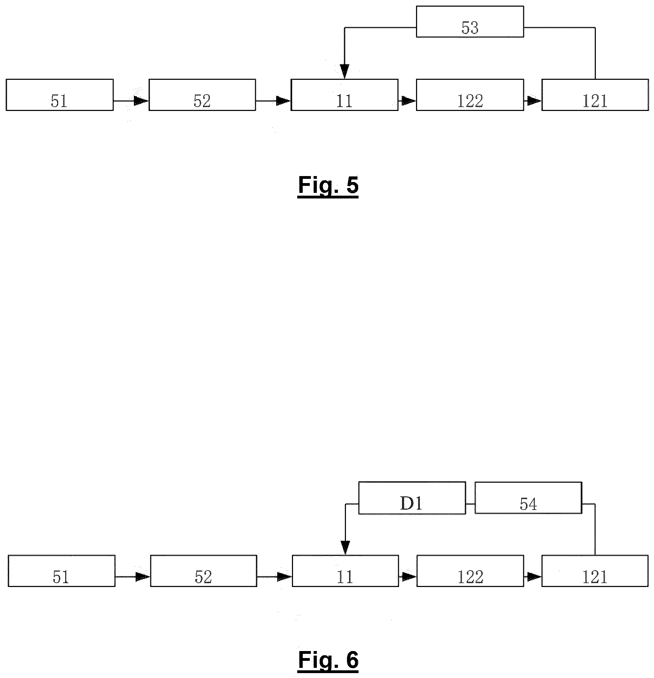

Referring to **Fig. 5**, Fig. 5 shows a schematic of an energy recycling circuit (14) according to an embodiment of the present invention.

As shown in Fig. 5, a vehicle battery may be used as a recharging source 51 to provide raw energy for vehicle braking. The raw energy may charge an ultra-capacitor module 11 after being voltage converted by a DC-DC charging module 52. The ultra-capacitor module 11 may output electric energy to the brake motor 121 via a control module 122 of the electric brake device 12 to generate a braking force.

In response to a command to release the brake, the control module 122 may stop powering the brake motor 121. The brake motor 121 may be reversely rotated by the mechanical transmission mechanism to generate a reverse electromotive force. The reverse electromotive force is higher than a motor input voltage V1 (for example, 48 V) provided by the ultra-capacitor module 11. An operating voltage threshold of a DC-DC converter 53 of the energy recycling circuit (14) may be greater than the maximum operating voltage V1 of the ultra-capacitor module 11. In response to a reverse electromotive force higher than the motor input voltage V1, the DC-DC converter 53 may recover the energy generated by the brake motor 121 to the ultra-capacitor module 11 for charging, or transfer the energy to other devices of the vehicle to supply power to the other devices, thereby recovering the energy generated when the brake motor 121 is reversed and preventing overvoltage damage of the control module 122.

Optionally, in an embodiment, the charging level of the ultra-capacitor module 11, namely the amount of energy charged thereinto is associated with the actual recyclable energy recovered via the energy recycling circuit (14). Specifically, after estimating possible recovering energy, the recharging source 51 may not charge the ultra-capacitor module 11 to a rated voltage (for example, 48 V), but remain a voltage margin for the recovering energy. In response to a reverse electromotive force higher than the motor input voltage V1, the DC-DC converter 53 may recover the energy generated by the brake motor 121 to the super capacitor module 11 for charging, thereby charging the remaining voltage margin to save energy of the recharging source 51. The recovering energy may be estimated by multiplying energy, input into all of the electric brake devices 12, by a corresponding recovery factor. If it is estimated that there is no energy available for recovery, the recharging source 51 may directly charge the voltage of the ultra-capacitor module 11 to a rated voltage of 48 V.

Optionally, in another embodiment, the charging level of the ultra-capacitor module 11 is configured to reserve a preset margin corresponding to the maximum recyclable energy recovered via the energy recycling circuit (14). In response to a control command indicating braking, the ultra-capacitor module 11 may power the electric brake device 12 to brake. At this time, energy is stored in the electric brake device 12. The recharging source 51 may always remain a preset margin when charging the ultra-capacitor module 11. The preset margin may correspond to the maximum recoverable energy that may be recovered from the brake motor 121 to the ultra-capacitor module 11 via the energy recycling circuit (14). Specifically, in the present embodiment, the rated voltage of the ultra-capacitor module 11 may be 48 V, and the maximum energy input to the electric brake device 12 may charge the ultra-capacitor module 11 from 46 V to 48 V during recovery. When energy is stored in the electric brake device 12, the charging of the ultra-capacitor module 11 by the recharging source 51 may always be stopped at 46 V to remain a margin for energy recovery.

In another embodiment of the present invention, the energy recycling circuit (14) may comprise a unidirectional conduction element D1 and a voltage regulating element. The voltage regulating element may be a linear voltage regulator 54 or a DC-DC converter 53.

Referring to **Fig. 6**, Fig. 6 shows a schematic of an energy recycling circuit (14) according to an embodiment of the present invention.

As shown in Fig. 6, in the energy recycling circuit (14), the unidirectional conduction element D1 comprises, but is not limited to, at least one of a diode, a thyristor, a triode or a MOS transistor. The unidirectional conduction element D1 is mainly configured to prevent the capacitor-based power source 11 from supplying power to the brake motor 121 via the energy recycling circuit (14). The unidirectional conduction element D1 is also configured to allow the reverse electromotive force to charge the capacitor-based power source 11 via the energy recycling circuit (14) when the brake motor 121 is reversed to generate the reverse electromotive force, to recover the energy generated when the brake motor 121 is reversed, thereby avoiding overvoltage damage of the control module 122.

Taking a linear voltage regulator 54 as a voltage regulating element as an example, the linear voltage regulator 54 may be a voltage mode voltage regulator or a current mode voltage regulator. The operating voltage threshold of the linear voltage regulator 54 may be greater than the maximum operating voltage V1 of the capacitor-based power source 11 (for example, 48 V). In response to a reverse electromotive force higher than the motor input voltage V1, the linear regulator 54 may adjust the voltage from the brake motor 121 to the ultra-capacitor module 11 or other device, thereby taking advantage of energy generated when the brake motor 121 is reversed and preventing overvoltage damage to the control module 122.

In order to prevent the current on the energy recycling circuit (14) from being excessive when the brake motor 121 reverses to generate the reverse electromotive force, the energy recycling circuit (14) may further comprise a current limiting resistor for limiting reverse current flow caused by the energy generated when the brake motor 121 is reversed.

As described above, in order to further prevent the control module 122 from overvoltage damage caused by the transient reverse electromotive force generated when the brake motor 121 is reversed, the power switch assembly 123 of the electromechanical brake system (1) provided by the embodiment may implement a protection switch function.

As shown in Fig. 1, the protection switch assembly 123 may comprise two P-channel MOS transistors Q7-Q8 and a transistor T1, connected in series to the power supply main circuit (13).

The transistor T1 may be respectively connected to the main control unit 1221 of the control module 122 and the gates of the P-channel MOS transistors Q7-Q8.

The capacitor-based power source 11 may be electrically connected to the brake motor 121 through the protection switch assembly 123 to supply power to the brake motor 121. The protection switch assembly 123 may still have basic functions of the power switch assembly described above, configured to control whether the power supply main circuit (13) is forward conducted.

Those skilled in the art may understand that the protection switch assembly 123 having the function of a power switch assembly is only a specific solution provided by the embodiment, mainly configured to more clearly showing the main idea of the present invention to the public and provide a practical implementation, but not intended to limit the scope of protection of the present invention. In other embodiments, those skilled in the art may also provide a separate power switch assembly and a separate protection switch assembly to achieve the same function.

In order to accurately control the braking torque provided, by the brake motor 121, to a brake actuator, the electromechanical brake system (1) provided in this embodiment may further comprise a control module 122 for controlling the protection switch assembly 123 to be turned on and off. The control module 122 may comprise a main control unit 1221, a motor drive module 1222, and a drive bridge circuit 1223.

The main control unit 1221 may be electrically connected to the power switch T1 of the protection switch assembly 123, configured to turn on or off the power switch T1, thereby turning on or off the protection switch assembly, i.e. the power switch assembly 123.

The motor drive module 1222 may be connected in series between the main control unit 1221 and the drive bridge circuit 1223 for receiving control signal output by the main control unit 1221 and converting it into a driving signal for controlling on and off of each MOS transistor in the drive bridge circuit 1223, thereby controlling the three phase inputs U, V, W of the brake motor 121 to supply power to the brake motor 121 alternately.

The protection switch assembly, i.e. power switch assembly 123 may be configured to control the conduction of the power supply main circuit (13) to enable the motor drive module 1222. The motor drive module 1222 may be configured to control the brake motor 121 to perform a positive rotation to output a positive torque.

In addition, the control module 122 may further control the protection switch assembly 123 to cut off the electrical connection between the motor 121 and the capacitor-based power source 11, in response to an abnormal signal, such as a reverse electromotive force generated by a reverse rotation of the brake motor 121.

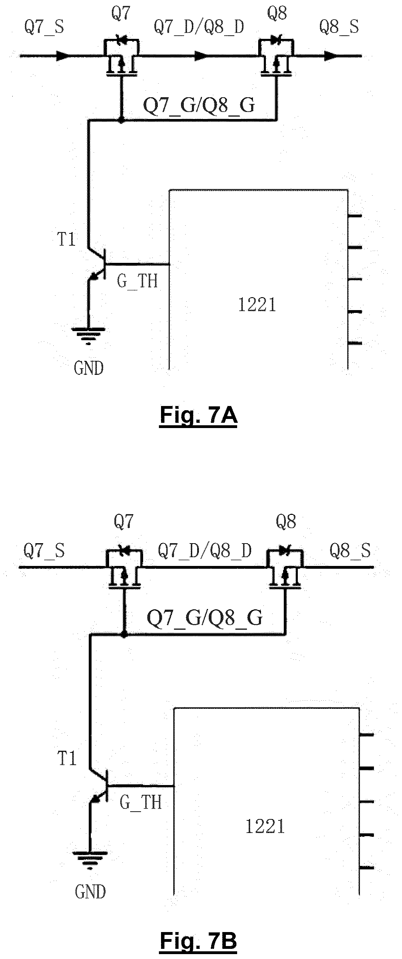

Further referring to **Fig. 7A-7B**, Fig. 7A-7B show schematics of ports of a protective switch assembly according to an embodiment of the present invention.

As shown in Fig. 7A-7B, the conduction condition of the P-channel MOS transistors Q7-Q8 of the protection switch assembly 123, may be that the voltage difference between the source and the gate should be greater than a certain voltage, such as 12 V.

As shown in **Fig. 7A**, when the source Q7_S of the transistor Q7 is positive to the ground GND, that is, when the capacitor-based power source 11 outputs a positive voltage, the main control unit 1221 of the control module 122 may work normally to control the conduction of the transistor T1. At this time, the source Q7_S of the transistor Q7 is positive to the gates Q7_G/Q8_G of the transistors Q7 and Q8, turning on the transistor Q7. The voltage of the drain Q7_D of the transistor Q7 is equal to the input voltage of Q7_S, setting high the voltage of the drain Q8_D of the transistor Q8, which is equal to the voltage of Q7_D. Current flows through a body diode of transistor Q8, setting high the voltage of the source Q8_S of the transistor Q8. At this time, the voltage of Q8_S is higher than the voltage of the gates Q7_G/Q8_G of the transistors Q7 and Q8, turning on the transistor Q8. Therefore, current may flow from the input terminal Q7_S to the brake motor 121.

As shown in **Fig. 7B**, when the input terminal Q7_S is negative to the ground GND, the main control unit 1221 of the control module 122 may not operate, turning off the transistor T1. The Q7_S is negative to the Q7_G/Q8_G, turning off the transistor Q7. Therefore, current may not flow, thereby preventing reverse connection.

Further, in addition to the anti-reverse connection function described above, the protection switch assembly 123 combined by the transistors Q7 and Q8 may further constitute a high-side switch.

The high-side switch may turn off the transistor T1 by the main control unit 1221 when the system has an abnormality such as overcurrent, overvoltage, short circuit, etc., thereby turning off the transistors Q7 and Q8 to cut off the electrical connection between the brake motor 121 and the capacitor-based power source 11to protect the circuit.

In order to more clearly disclose the concept of the present invention, facilitating the public to understand the technical solutions of the present invention, an embodiment of braking and recovering energy, employing the electromechanical brake system, is also provided herein. The electromechanical brake system may be applied to a passenger vehicle or a large commercial vehicle.

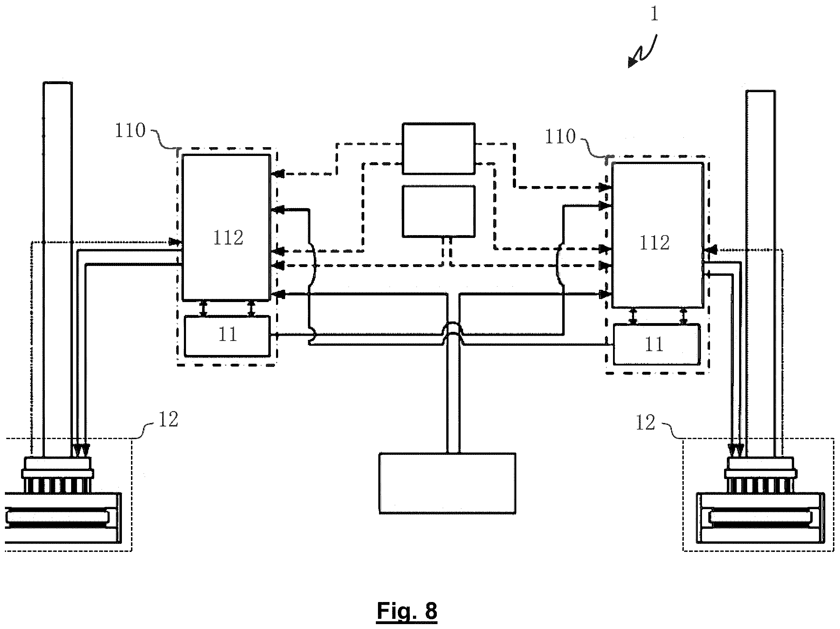

Referring to **Fig. 8**, Fig. 8 shows a schematic of an electromechanical brake system (1), comprising a plurality of electric brake devices 12, according to an embodiment of the present invention.

As shown in Fig. 8, the plurality of electric brake devices 12 in the electromechanical brake system (1) may be disposed at a plurality of wheel ends of the vehicle, configured to respectively brake a plurality of wheels, thereby providing a more uniform braking force. Exemplarily, the electromechanical brake system (1) may comprise two controllers 110, respectively corresponding to a front axle and a rear axle. Each controller 110 may comprise a control unit 112 and a capacitor-based power source 11 for providing braking energy, wherein the capacitor-based power source 11 may employ any configurations described in the foregoing embodiments.

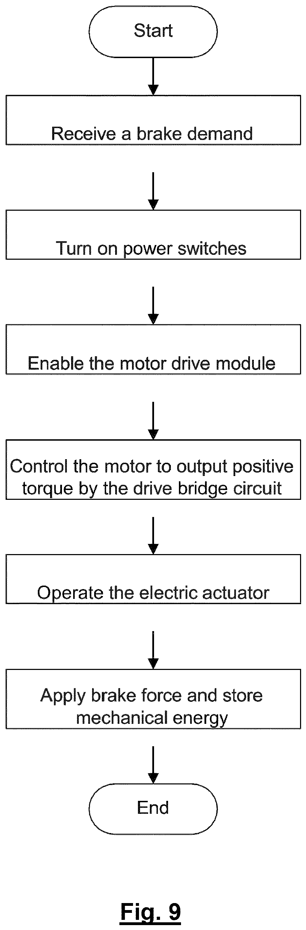

Referring to **Fig. 9**, Fig. 9 shows a flowchart of a brake action performed by an electromechanical brake system (1) according to another embodiment of the present invention.

As shown in Fig. 9, when the driver depresses a brake pedal, in response to receiving a command indicating a brake demand, the main control unit 1221 of the control module 122 may output a control signal to turn on the power switch T1.

At this time, the source Q7_S of the transistor Q7 is positive to the gates Q7_G/Q8_G of the transistors Q7 and Q8 in Fig. 7A, turning on the transistor Q7. The voltage of the drain Q7_D of the transistor Q7 is equal to the input voltage of Q7_S, setting high the voltage of the drain Q8_D of the transistor Q8, which is equal to the voltage of Q7_D. Current flows through a body diode of transistor Q8, setting high the voltage of the source Q8_S of the transistor Q8. At this time, the voltage of Q8_S is higher than the voltage of the gates Q7_G/Q8_G of the transistors Q7 and Q8, turning on the transistor Q8. The protection switch assembly 123 is turned on to set the voltage of the terminal V1 high. Current may flow from the input terminal Q7_S to the brake motor 121 to supply power to the brake motor 121.

Meanwhile, the main control unit 1221 of the control module 122 may further output a control signal to enable the motor drive module 1222.

In response to receiving a control signal output by the main control unit 1221, the motor drive module 1222 may convert the control signal into a drive signal for controlling on and off of each of the MOS transistors in the drive bridge circuit 1223, thereby controlling the three phase inputs U, V, and W to alternately supply power to the brake motor 121.

The brake motor 121 may be rotated forward under a drive control of the three phase inputs U, V, W, thereby outputting a corresponding positive torque to operate the electric actuator 31 and drive the mechanical transmission mechanism. The mechanical transmission mechanism may make a brake calliper clamp the brake disc of a wheel under the driving of the positive torque, thereby generating a braking force.

At this time, the speed of the vehicle may be lowered by the braking force, and the mechanical transmission mechanism and the brake calliper may store a portion of energy during the transfer of braking force from the motor to the brake disc.

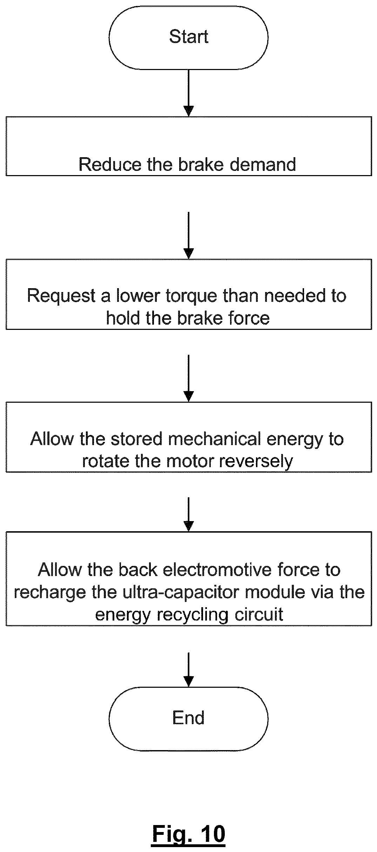

Referring to **Fig. 10**, Fig. 10 shows a flowchart of energy recovery performed by an electromechanical brake system (1) according to another embodiment of the present invention.

As shown in Fig. 10, when the driver releases a brake pedal, in response to receiving a brake command to release or reduce a brake demand, the main control unit 1221 of the control module 122 may output a control signal to the motor drive module 1222 to request a lower torque than needed to hold the brake force, hence allowing the mechanical energy stored in the mechanical transmission mechanism and the calliper to rotate the motor reversely. Thereby the back electromotive force generated may recharge the ultra-capacitor module 11 via the energy recycling circuit (14), thus the energy recycling is achieved.

In some emergency situation, the main control unit 1221 of the control module 122 may stop supplying power to the brake motor 121 directly. Meanwhile, the three phase inputs U, V, W of the three-phase full bridge drive circuit may stop driving the brake motor 121. The brake motor 121 may stop outputting positive torque to the mechanical transmission. The mechanical transmission mechanism may release the brake calliper by losing the urging force provided by the brake motor 121.

At this time, the brake motor 121 may be reversely rotated under the effect of the mechanical transmission mechanism, wherein the speed of rotation of the brake motor 121 may be proportional to the braking force generated when the brake is applied. That is to say, the greater the braking force applied during the brake, the greater the force of rebounding when the brake is released, and the faster the motor reverses accordingly.

When the brake motor 121 is reversed, energy may be generated in form of a reverse electromotive force that may cause a voltage rise across the control module 122.

At this time, the main control unit 1221 of the control module 122 may output a control signal to enable the motor drive module 1222.

In response to receiving the control signal output by the main control unit 1221, the motor drive module 1222 may convert the control signal into a drive signal for controlling the on and off of each MOS transistor in the drive bridge circuit 1223, thereby controlling the three phase inputs U, V, W to recover power from the three-phase brake motor 121 through ones of the three phase inputs of the brake motor 121 that are not involved in power supply alternately.

The energy generated in form of a reverse electromotive force when the brake motor 121 is reversed, may be returned to the capacitor-based power source 11 via the energy recycling circuit (14).

Specifically, the energy recycling circuit (14) may comprise a unidirectional conduction element D1. The unidirectional conduction element D1 comprises, but is not limited to, at least one of a diode, a thyristor, a triode or a MOS transistor, mainly configured to prevent the capacitor-based power source 11 from supplying power to the brake motor 121. When the brake motor 121 is reversed to generate a reverse electromotive force, the unidirectional conduction element D1 may further configured to charge the capacitor-based power source 11 by the reverse electromotive force to recover the energy generated when the brake motor 121 is reversed, thereby avoiding overvoltage damage of the control module 122.

In order to prevent excessive current on the energy recycling circuit (14) when the brake motor 121 reverses to generate the reverse electromotive force, the current recycling circuit may further comprise a current limiting resistor R10. The current limiting resistor R10 may be configured to limit the return current flow caused by the energy generated when the brake motor 121 is reversed.

Those skilled in the art may understand that the specific value of the current limiting resistor R10 may be determined by the current capability of each circuit unit on the energy recycling circuit (14). A current limiting resistor R10 with an insufficient resistance may cause overcurrent damage to the wires or unidirectional conduction element D1 on the energy recycling circuit (14). On the contrary, a current limiting resistor R10 with excessive resistance may cause an insufficient recharging flow, so that the energy generated when the brake motor 121 is reversed may not be recovered in time, thereby causing overvoltage damage of the control module 122.

In addition, the current limiting resistor R10 with excessive resistance may further cause more energy loss, thereby reducing energy recovering rate of the energy recycling circuit (14), and generating a large amount of heat to increase the load on the heat dissipation system of the vehicle.

In order to further prevent the control module 122 from overvoltage damage caused by the transient reverse electromotive force generated when the brake motor 121 is reversed, the power switch assembly 123 of the electromechanical brake system (1) provided by the embodiment may further implement a protection switch function.

As shown in Fig. 1, the protection switch assembly 123 may comprise two P-channel MOS transistors Q7-Q8 and a transistor T1, connected in series to the power supply main circuit (13). The transistor T1 may be respectively connected to the main control unit 1221 of the control module 122 and the gates of the P-channel MOS transistors Q7-Q8.

The capacitor-based power source 11 may be electrically connected to the brake motor 121 through the protection switch assembly 123 to supply power to the brake motor 121. The protection switch assembly 123 may still have basic functions of the power switch assembly described above, configured to control whether the power supply main circuit (13) is forward conducted.

As shown in Fig. 7B, when the input terminal Q7_S is negative to the ground GND, the main control unit 1221 of the control module 122 may not operate, turning off the transistor T1. The Q7_S is negative to the Q7_G/Q8_G, turning off the transistor Q7. Therefore, current may not flow, thereby preventing a reverse connection.

Those skilled in the art may understand that the protection switch assembly 123 having the function of a power switch assembly is only a specific solution provided by the embodiment, mainly configured to more clearly showing the main idea of the present invention to the public and provide a practical implementation, but not intended to limit the scope of protection of the present invention. In other embodiments, those skilled in the art may also provide a separate power switch assembly and a separate protection switch assembly to achieve the same function.

### LIST OF REFERENCE NUMERALS

- 1: electromechanical brake system
- 11: capacitor-based power source
- C1-Cn: capacitor unit
- 110: controller
- 112: control unit
- 12: electric brake device
- 121: brake motor
- 122: control module
- 1221: main control unit
- 1222: motor drive module
- 1223: drive bridge circuit
- 1224: current sampling circuit
- 123: power switch assembly
- 13: power supply main circuit
- 14: energy recycling circuit
- D1: unidirectional conduction element
- R10: current limiting resistor
- T1: transistor
- Q7-Q8: PMOS transistor
- V1: motor input voltage
- GND: ground
- QH1-QH3: MOS transistor
- QL1-QL3: MOS transistor
- 31: electric actuator
- 32: shaft
- 33: mechanical transmission mechanism
- 34: brake pad
- 51: recharging source
- 52: DC-DC charging module
- 53: DC-DC converter
- 54: linear voltage regulator
- Q7_S: source of Q7
- Q8_S: source of Q8
- Q7_D/Q8_D: drains of Q7 and Q8
- Q7_G/Q8_G: gates of Q7 and Q8
- G_TH: base of T1

## Claims

1. An electromechanical brake system, the electromechanical brake system (1) comprising
a) a caliper connected to the end of a mechanical transmission mechanism for clamping a brake disc,
b) a capacitor-based power source (11) and
c) at least one electric brake device (12), the electric brake device (12) comprising a motor (121) that acquires electric power from the capacitor-based power source (11) via a power supply main circuit (13) to generate a braking force, wherein
d) the electromechanical brake system (1) further comprises an energy recycling circuit (14) connected in parallel to the power supply main circuit (13), the energy recycling circuit (14) comprises a unidirectional conduction element (D1) and/or a voltage regulating element (53, 54),
e) when the brake force is reduced or the brake is at least partially released in response to a braking demand, the motor (121) generates energy which is returned to the capacitor-based power source (11) via the energy recycling circuit (14),
f) the electromechanical brake system (1) further comprises a protective switch assembly (123), the capacitor-based power source (11) is electrically connected to the motor (121) through the protective switch assembly (123) and the protective switch assembly (123) is configured to control forward conduction of the power supply main circuit (13) and
g) the electric brake device (12) further comprises a control module (122), which is electrically connected to the motor (121) and the protection switch assembly (123), and controls the protective switch assembly (123) to cut off an electrical connection between the motor (121) and the capacitor-based power source (11) in response to an abnormality signal,
h) the energy recycling circuit (14) protecting the control module (122) from an overvoltage damage and recovering the energy generated when the brake motor (121) is reversed.

2. The electromechanical brake system of claim 1, wherein when the energy recycling circuit (14) comprises the voltage regulating element,
the voltage regulating element comprises a linear voltage regulator (54) and/or a DC-DC converter (53).

3. The electromechanical brake system of claim 1, wherein when the energy recycling circuit (14) comprises the voltage regulating element,
an operating voltage threshold of the voltage regulating element is greater than a maximum operating voltage of the capacitor-based power source (11).

4. The electromechanical brake system of claim 1, wherein the energy recycling circuit (14) comprises a resistance (R10) for limiting a recharge current generated by the energy.

5. The electromechanical brake system of claim 1, wherein when the energy recycling circuit (14) comprises the unidirectional conduction element (D1),
the unidirectional conduction element (D1) comprises at least one of a diode, a thyristor, a triode or a MOS transistor.

6. The electromechanical brake system of claim 1, wherein a charging level of the capacitor-based power source (11) is configured to be associated with actual recyclable energy recovered from the motor (121) to the capacitor-based power source (11) via the energy recycling circuit (14).

7. The electromechanical brake system of claim 1, wherein a charging level of the capacitor-based power source (11) is configured to reserve a preset margin corresponding to maximum recyclable energy that is recovered from the motor (121) to the capacitor-based power source (11) via the energy recycling circuit (14).

8. The electromechanical brake system of claim 1, wherein a mechanical transmission mechanism of the electric brake device (12) is a non-self-locking mechanism.

9. The electromechanical brake system of claim 1, wherein the protective switch assembly (123) comprises a triode (T1) and at least two MOS transistors (Q7-Q8),
the at least two MOS transistors (Q7-Q8) are connected in series with the power supply main circuit (13), the triode (T1) is electrically connected to the at least two the MOS transistors (Q7-Q8),
the control module (122) turns off at least two of the MOS transistors (Q7-Q8) by controlling the triode (T1) to cut off the electrical connection between the motor (121) and the capacitor-based power source (11) in response to the abnormality signal.

10. The electromechanical brake system of claim 1, wherein the control module (122) comprises a main control unit (1221) and a motor drive module (1222), the motor (121) comprises at least two phase inputs,
the main control unit (1221) is communicatively connected to a power switch,
the main control unit (1221) is configured to turn the power switch on or off,
the power switch is configured to enable the motor drive module (1222),
the motor drive module (1222) is configured to control the motor (121) to output a positive torque.

11. The electromechanical brake system of claim 1, wherein the motor (121) comprises three phase inputs,
when the brake force is reduced or the brake is at least partially released in response to the braking demand, the motor (121) acquires electric power from the power supply main circuit (13) through at least one of the three phase inputs to drive the motor (121) to output a positive torque, the energy recycling circuit (14) recovers electric power from the motor (121) through the remaining of the three phase inputs.

12. The electromechanical brake system of one of claims 1 to 11, wherein that the motor (121) comprises a DC motor.

13. The electromechanical brake system of one of claims 1 to 11, wherein in that the capacitor-based power source (11) comprises an ultra-capacitor.

## Patentansprüche

1. Elektromechanisches Bremssystem, wobei das elektromechanische Bremssystem (1) aufweist
a) einen Bremssattel, der mit dem Ende eines mechanischen Übertragungsmechanismus zum Einspannen einer Bremsscheibe verbunden ist,
b) einer auf einer Kapazität basierenden Leistungsquelle (11) und
c) mindestens einer elektrischen Bremseinrichtung (12), wobei die elektrische Bremseinrichtung (12) einen Motor (121) aufweist, der zur Erzeugung einer Bremskraft elektrische Leistung von der auf einer Kapazität basierenden Leistungsquelle (11) über einen Leistungs-Hauptversorgungskreis (13) empfängt, wobei
d) das elektromechanische Bremssystem (1) des Weiteren einen Energie-Rückgewinnungskreis (14) aufweist, der parallel zu dem Leistungs-Hauptversorgungskreis (13) geschaltet ist, wobei der Energie-Rückgewinnungskreis (14) ein unidirektionales Leitelement (D1) und/oder ein Spannungs-Regelelement (53, 54) aufweist,
e) wobei dann, wenn in Abhängigkeit von einer Bremsanforderung die Bremskraft reduziert wird oder die Bremse zumindest teilweise gelöst wird, der Motor (121) Energie erzeugt, die über den Energie-Rückgewinnungskreis (14) zu der auf einer Kapazität basierenden Leistungsquelle (11) rückgeführt wird,
f) wobei das elektromechanische Bremssystem (1) des Weiteren eine Schutzschalter-Baugruppe (123) aufweist, die auf einer Kapazität basierende Leistungsquelle (11) mit dem Motor (121) elektrisch durch oder über die Schutzschalter-Baugruppe (123) verbunden ist und die Schutzschalter-Baugruppe (123) geeignet konfiguriert ist, um eine Vorwärtsleitung des Leistungs-Hauptversorgungskreises (13) zu steuern oder zu regeln, und
g) die elektrische Bremseinrichtung (12) des Weiteren ein Steuer- oder Regelmodul (122) aufweist, welches elektrisch mit dem Motor (121) und der Schutzschalter-Baugruppe (123) verbunden ist und die Schutzschalter-Baugruppe (123) in Reaktion auf ein Abnormalitäts-Signal zur Herbeiführung einer Trennung einer elektrischen Verbindung zwischen dem Motor (121) und der auf einer Kapazität basierenden Leistungsquelle (11) ansteuert oder regelt,
h) wobei der Energie-Rückgewinnungskreis (14) das Steuer- oder Regelmodul (122) hinsichtlich eines Überspannungs-Schadens schützt und die Energie rückgewinnt, die erzeugt wird, wenn der Bremsmotor (121) umgekehrt betrieben wird.

2. Elektromechanisches Bremssystem nach Anspruch 1, **wobei** dann, wenn der Energie-Rückgewinnungskreis (14) das Spannungs-Regelelement aufweist, dass Spannungs-Regelelement einen linearen Spannungsregler (54) und/oder einen DC-DC-Konverter (53) aufweist.

3. Elektromechanisches Bremssystem nach Anspruch 1, **wobei** dann, wenn der Energie-Rückgewinnungskreis (14) das Spannungs-Regelelement aufweist, ein Betriebsspannungs-Schwellwert des Spannungs-Regelelements größer ist als eine maximale Betriebsspannung der auf einer Kapazität basierenden Leistungsquelle (11).

4. Elektromechanisches Bremssystem nach Anspruch 1, **wobei** der Energie-Rückgewinnungskreis (14) einen Widerstand (R10) zur Begrenzung eines Wiederaufladestromes, der durch die Energie oder Energierückgewinnung erzeugt wird, aufweist.

5. Elektromechanisches Bremssystem nach Anspruch 1, **wobei** dann, wenn der Energie-Rückgewinnungskreis (14) das unidirektionale Leitelement (D1) aufweist, dass unidirektionale Leitelement (D1) eine Diode, einen Thyristor, eine Triode und/oder einen MOS-Transistor aufweist.

6. Elektromechanisches Bremssystem nach Anspruch 1, **wobei** ein Ladeniveau der auf einen Kapazität basierenden Leistungsquelle (11) derart konfiguriert ist, dass diese der tatsächlich rückgewinnbaren Energie, die von dem Motor (121) für die auf einer Kapazität basierende Leistungsquelle (11) über den Energie-Rückgewinnungskreis (14) rückgewonnen werden kann, zugeordnet werden kann.

7. Elektromechanisches Bremssystem nach Anspruch 1, **wobei** ein Ladeniveau der auf einer Kapazität basierende Leistungsquelle (11) geeignet konfiguriert ist zum Vorbehalt einer vorgegebenen Spanne, eines Spielraums, einer Differenz oder eines Abstandes entsprechend der maximal rückgewinnbaren Energie, die von dem Motor (121) für die auf einer Kapazität basierende Leistungsquelle (11) über den Energie-Rückgewinnungskreis (14) rückgewonnen werden kann.

8. Elektromechanisches Bremssystem nach Anspruch 1, **wobei** ein mechanischer Übertragungsmechanismus der elektrischen Bremseinrichtung (12) ein nicht selbstverriegelnder Mechanismus ist.

9. Elektromechanisches Bremssystem nach Anspruch 1, **wobei** die Schutzschalter-Baugruppe (123) eine Triode (T1) und mindestens zwei MOR-Transistoren (Q7-Q8) aufweist,
wobei die mindestens zwei MOS-Transistoren (Q7-Q8) in Reihenschaltung zu dem Haupt-Leistungsversorgungskreis (13) angeordnet sind, die Triode (T1) elektrisch mit den mindestens zwei MOS-Transistoren verbunden ist,
wobei das Steuer- oder Regelmodul (122) durch Steuerung oder Regelung der Triode (T1) mindestens zwei der MOS-Transistoren (Q7-Q8) abschaltet, um die elektrische Verbindung zwischen dem Motor (121) und der auf einer Kapazität basierenden Leistungsquelle (11) in Reaktion auf das Abnormalitäts-Signal zu trennen.

10. Elektromechanisches Bremssystem nach Anspruch 1, **wobei** das Steuer- oder Regelmodul (122) eine Haupt-Steuereinheit oder Haupt-Regeleinheit (1221) und ein Motor-Antriebsmodul (1222) aufweist, wobei der Motor (121) mindestens zwei Phaseneingänge aufweist,
wobei die Haupt-Steuereinheit oder Haupt-Regeleinheit (1221) kommunizierend mit einem Leistungsschalter verbunden ist,
die Haupt-Steuereinheit oder Haupt-Regeleinheit (1221) geeignet konfiguriert ist, um den Leistungsschalter an- oder abzuschalten,
der Leistungsschalter konfiguriert ist, um das Motor-Antriebsmodul (1222) zu aktivieren,
das Motor-Antriebsmodul (1222) konfiguriert ist zum Steuern oder Regeln des Motors (121) zur Ausgabe eines positiven Momentes.

11. Elektromechanisches Bremssystem nach Anspruch 1, **wobei** der Motor (121) drei Phaseneingänge aufweist,
wobei dann, wenn in Reaktion auf die Bremsanforderung die Bremskraft reduziert wird oder die Bremse zumindest teilweise gelöst wird, der Motor (121) elektrische Leistung von dem Haput-Leistungsversorgungskreis (13) über mindestens einen der drei Phaseneingänge empfängt zum Antrieb des Motors (121) zur Ausgabe eines positiven Moments, wobei der Energie-Rückgewinnungskreis (14) elektrische Leistung von dem Motor (121) durch die verbleibenden der drei Phaseneingänge rückgewinnt.

12. Elektromechanisches Bremssystem nach einem der Ansprüche 1 bis 11, **wobei** der Motor (121) einen DC-Motor aufweist.

13. Elektromechanisches Bremssystem nach einem der Ansprüche 1 bis 11, **wobei** die auf einer Kapazität basierende Leistungsquelle (11) ein Ultra-Kondensator ist.

## Revendications

1. Système de freinage électromécanique, le système de freinage électromécanique (1) comprenant :
a) un étrier raccordé à l'extrémité d'un mécanisme de transmission mécanique pour serrer un disque de frein ;
b) une source d'énergie à base de condensateur (11) ; et
c) au moins un dispositif de freinage électrique (12), le dispositif de freinage électrique (12) comprenant un moteur (121) qui acquiert de l'énergie électrique à partir de la source d'énergie à base de condensateur (11) par l'intermédiaire d'un circuit principal de fourniture d'énergie (13), en vue de produire une force de freinage, dans lequel
d) le système de freinage électromécanique (1) comprend en outre un circuit de recyclage d'énergie (14) connecté en parallèle au circuit principal de fourniture d'énergie (13), dans lequel le circuit de recyclage d'énergie (14) comprend un élément de conduction unidirectionnel (D1) et/ou un élément de régulation de tension (53, 54) ;
e) lorsque la force de freinage est réduite ou que le frein est au moins partiellement desserré en réponse à une demande de freinage, le moteur (121) produit de l'énergie qui est renvoyée à la source d'énergie à base de condensateur (11) par l'intermédiaire du circuit de recyclage d'énergie (14) ;
f) le système de freinage électromécanique (1) comprend en outre un ensemble commutateur de protection (123), la source d'énergie à base de condensateur (11) est connectée électriquement au moteur (121) par l'intermédiaire de l'ensemble commutateur de protection (123), et l'ensemble commutateur de protection (123) est configuré de manière à commander la conduction vers l'avant du circuit principal de fourniture d'énergie (13) ;
g) le dispositif de freinage électrique (12) comprend en outre un module de commande (122), qui est connecté électriquement au moteur (121) et à l'ensemble commutateur de protection (123) et qui commande l'ensemble commutateur de protection (123) pour couper une connexion électrique entre le moteur (121) et la source d'énergie à base de condensateur (11) en réponse à un signal d'anomalie ; et
h) le circuit de recyclage d'énergie (14) protège le module de commande (122) contre tout dommage dû à des surtensions, et récupère l'énergie produite lorsque le moteur de freinage (121) est inversé.

2. Système de freinage électromécanique selon la revendication 1, dans lequel, lorsque le circuit de recyclage d'énergie (14) comprend l'élément de régulation de tension, l'élément de régulation de tension comprend un régulateur de tension linéaire (54) et/ou un convertisseur continu-continu (53).

3. Système de freinage électromécanique selon la revendication 1, dans lequel, lorsque le circuit de recyclage d'énergie (14) comprend l'élément de régulation de tension, un seuil de tension de fonctionnement de l'élément de régulation de tension est supérieur à une tension de fonctionnement maximale de la source d'énergie à base de condensateur (11).

4. Système de freinage électromécanique selon la revendication 1, dans lequel le circuit de recyclage d'énergie (14) comprend une résistance électrique (R10) pour limiter un courant de recharge produit par l'énergie.

5. Système de freinage électromécanique selon la revendication 1, dans lequel, lorsque le circuit de recyclage d'énergie (14) comprend l'élément de conduction unidirectionnel (D1), l'élément de conduction unidirectionnel (D1) comprend au moins l'un des éléments parmi une diode, un thyristor, une triode ou un transistor MOS.

6. Système de freinage électromécanique selon la revendication 1, dans lequel un niveau de charge de la source d'énergie à base de condensateur (11) est configuré de manière à être associé à de l'énergie recyclable réelle récupérée depuis le moteur (121) vers la source d'énergie à base de condensateur (11) par l'intermédiaire du circuit de recyclage d'énergie (14).

7. Système de freinage électromécanique selon la revendication 1, dans lequel un niveau de charge de la source d'énergie à base de condensateur (11) est configuré de manière à réserver une marge prédéfinie correspondant à une énergie recyclable maximale qui est récupérée depuis le moteur (121) vers la source d'énergie à base de condensateur (11) par l'intermédiaire du circuit de recyclage d'énergie (14).

8. Système de freinage électromécanique selon la revendication 1, dans lequel un mécanisme de transmission mécanique du dispositif de freinage électrique (12) est un mécanisme non autobloquant.

9. Système de freinage électromécanique selon la revendication 1, dans lequel :
l'ensemble commutateur de protection (123) comprend une triode (T1) et au moins deux transistors MOS (Q7-Q8) ;
lesdits au moins deux transistors MOS (Q7-Q8) sont connectés en série avec le circuit principal de fourniture d'énergie (13), la triode (T1) est connectée électriquement auxdits au moins deux transistors MOS (Q7-Q8) ; et
le module de commande (122) coupe au moins deux des transistors MOS (Q7-Q8) en commandant à la triode (T1) de couper la connexion électrique entre le moteur (121) et la source d'énergie à base de condensateur (11) en réponse au signal d'anomalie.

10. Système de freinage électromécanique selon la revendication 1, dans lequel le module de commande (122) comprend une unité de commande principale (1221) et un module d'entraînement de moteur (1222) ;
le moteur (121) comprend au moins deux entrées de phase ;
l'unité de commande principale (1221) est connectée en communication à un commutateur d'alimentation ;
l'unité de commande principale (1221) est configurée de manière à activer ou désactiver le commutateur d'alimentation ;
le commutateur d'alimentation est configuré de manière à activer le module d'entraînement de moteur (1222) ; et
le module d'entraînement de moteur (1222) est configuré de manière à commander au moteur (121) de fournir en sortie un couple positif.

11. Système de freinage électromécanique selon la revendication 1, dans lequel le moteur (121) comprend trois entrées de phase ;
lorsque la force de freinage est réduite ou que le frein est au moins partiellement desserré en réponse à la demande de freinage, le moteur (121) acquiert de l'énergie électrique à partir du circuit principal de fourniture d'énergie (13) par l'intermédiaire d'au moins l'une des trois entrées de phase, pour entraîner le moteur (121) en vue de fournir en sortie un couple positif, et le circuit de recyclage d'énergie (14) récupère l'énergie électrique à partir du moteur (121) par l'intermédiaire de celle(s) restante(s) des trois entrées de phase.

12. Système de freinage électromécanique selon l'une quelconque des revendications 1 à 11, dans lequel le moteur (121) comprend un moteur à courant continu.

13. Système de freinage électromécanique selon l'une quelconque des revendications 1 à 11, dans lequel la source d'énergie à base de condensateur (11) comprend un ultra-condensateur.
